# EUROPEAN PATENT SPECIFICATION

(11) **EP 2 613 287 B1**
(45) Date of publication and mention of the grant of the patent: **06.12.2017**
(21) Application number: 12000048.4
(22) Date of filing: 04.01.2012
(51) Int. Cl.: G06Q 20/04, G06Q 20/20, G06Q 20/32, G06Q 20/42

(54) **Computer system and method for initiating payments based on cheques**
Computersystem und -verfahren zur Initiierung von Zahlungen auf Grundlage von Schecks
Système informatique et procédé pour initier des paiements basés sur des chèques

(43) Date of publication of application: 10.07.2013
(73) Proprietor: Barclays Bank PLC, London E14 5HP (GB)
(72) Inventor: Sayers, Ian, Poynton Cheshire SK12 1HE (GB); Dwyer, Demot, Chinley, High Peak SK23 6DS (GB); Foulds, Darren, Headley Down Hampshire, GU35 8AB (GB); Maddox, Paul Geoffrey, Farnham Surrey, GU10 1JX (GB)
(74) Representative: Cross, James Peter Archibald

(56) References cited:
- WO-A1-97/36266
- WO-A1-2010/004576
- WO-A2-2011/109517
- GB-A- 2 378 294
- US-A1- 2006 186 191
- US-A1- 2008 046 367

## Description

### Field of the Invention

This invention relates to initiating computerized payments based on cheques.

### Background of the Invention

In conventional cheque payment systems, a user ("the drawer") is issued with a book of paper cheques by his bank (the cheque issuing bank or "drawee"), on each of which is printed the name and number of the user's account, the name and sort code of his bank, and an individual cheque number.

When the user writes a cheque to a receiving party (the "payee"), he includes the date, the amount, and the name of receiving party, and signs the cheque. It was formerly common to write on the back the number of the user's cheque guarantee card, which guaranteed payment up to a certain limit, but such cards have now been largely replaced by debit and other cards.

The receiving party brings the cheque to his own (or another) bank (the "collecting bank"), which passes the cheque back to the issuing bank. At the issuing bank, the signature and, where present, cheque guarantee card number are checked. If funds are available, the issuing bank transfers the requested amount to the receiving bank, for the account of the payee. If not, the transaction is not honoured, the cheque is returned to the drawer, and the receiving bank and hence receiving party are notified.

In some countries, such as England and Scotland, a trusted central clearing house (Inter Bank Data Exchange, "IBDE", operated by the Cheque and Credit Clearing Company, "C&CCC") can perform some of the processing on behalf of the banks, but generally physical movement of the cheques to the drawee bank is still required, and the authentication of a cheque payment is required towards the end of the process, that is, when the 'pay/no-pay' decision is made by the paying bank. This is in contrast with most other types of payment.

Such systems are therefore comparatively expensive to operate for both the bank of the paying party and that of the receiving party. However, they have proved popular with customers, who are reluctant to replace them with other systems, in particular because they require little effort on behalf of the paying party, who merely needs to identify the payee by name.

It is known from US-7360081-A (and indeed generally) to authenticate an item by encrypting data relating to the item. At p6 lines 17-31 it is proposed to use cheque data *"such as data relating to the drawer bank, the date, the amount, the drawer, account number and branch code number"* to validate a cheque, by generating "*an encrypted code* ... *applied in human or machine perceivable form* ... *on the cheque."* However, that reference does not explain how such validation is used. It would presumably be used at the paying bank, once the cheque had been passed back to it from the receiving bank, as an additional level of security over use of the paying party's signature alone.

### Summary of the Invention

Rather than replacing paper cheques, the present invention is therefore intended to provide a computer system for initiation of rapid and secure computerized electronic transactions based on paper cheques. It preferably also leaves it open to the payee to present the cheques by conventional means. Aspects of the invention are defined in the independent claims.

Thus, due to the encoded data, the first bank (that of the payer) is able to accept a payment instruction from the paid party to transfer funds to a second bank (that of the paid party), without the need to physically pass the cheque through the second bank and then back to the first bank before the transaction can occur.

This has a number of advantages. Firstly, the first bank can check whether funds are available immediately, before any data is presented to the second bank, so there is no need to rollback transactions there if the cheque would bounce. Secondly, since all the conventional cheque data can be present, the paid party is still able to present the cheque physically to his own bank for conventional processing if so required. Thirdly, the paying party is able to continue to write a paper cheque as before, without the need to identify full details of the paid party's bank account which would be necessary if he were to attempt an online electronic interbank payment direct from his account to that of the paid party.

Preferably, the paying party terminal is a chip-and-PIN card reader of a type which is familiar to the user, so that the user's card number and PIN (known also to his bank) present a high level of authentication of the user, whilst feeling familiar.

Preferably, the paying party writes the encoded data onto the cheque and the paid party reads it therefrom.

Preferably, the cheque data to be input includes the payment amount, so that the paying party is secured against attempts by others (including the paid party) to alter the cheque amount because the computer can validate the amount using the same PIN and key as at the paying party terminal.

Preferably, the cheque data to be input includes the cheque number. Since each cheque is uniquely numbered, this means that the encoded data generated will be different (in an unpredictable way) for each cheque, even if the amount, date, and parties are identical. Thus, it is not possible for a paid party to fraudulently re-enter the same data twice, pretending that there are two cheques in the same amount. Both the payment amount and the cheque number are numeric and can therefore be entered in a standard chip-and-PIN-type device without requiring an alphanumeric keyboard.

Preferably, the computer is provided with a web server interface to allow the paid party to communicate electronically, very preferably using a secure connection such as a https connection, via a computer or mobile terminal such as a tablet or phone.

In one embodiment, the first bank is arranged to check whether the drawer and the payee have had any previous transactions. If not, the payee cannot use electronic payment, but can present the cheque for payment at a bank in conventional fashion. As many cheque payments are repeat transactions (birthday gifts to family members, or payments of utility bills) there is a greater likelihood that the bearer of the cheque is the intended payee. Preferably, the records held by the bank are updated so that next time the payee requests payment from the same person, the payment will be validated and made to the payee.

It will be seen that in this embodiment, the invention allows the paid party to instruct the paying party's bank to transfer funds, without himself needing a bank account there.

In yet another aspect, there is provided a computer program arranged to configure a computer system as the system described above.

In other aspects, there is provided a method of operating a payment instrument system as described above. In another aspect, there is provided a computer program arranged to carry out the method when executed by suitable programmable devices.

### Brief Description of the Drawings

The invention will now be illustrated, by way of example only, with reference to the accompanying drawings in which:
Figure 1 is a block diagram showing the main components of a payment system according to the invention;
Figure 2 is a block diagram showing the main components of a card reader comprising part of the system of Figure 1;
Figure 3 shows a cheque used in the invention of Figure 1;
Figure 4a is a flow diagram illustrating the main processing steps performed by the card reader of Figure 2 of the invention;
Figure 4b is a flow diagram illustrating the main processing steps performed by a web server computer system comprising part of the system of Figure 1;
Figure 4c is a flow diagram illustrating the main processing steps performed by a bank computer system comprising part of the system of Figure 1
Figure 5 corresponds to Figure 4c and shows the main processing steps performed by a bank computer system comprising part of the system of Figure 1 in an example of the invention;
Figure 6 corresponds to Figure 4c and shows the main processing steps performed by a bank computer system comprising part of the system of Figure 1 in an example of the invention; and

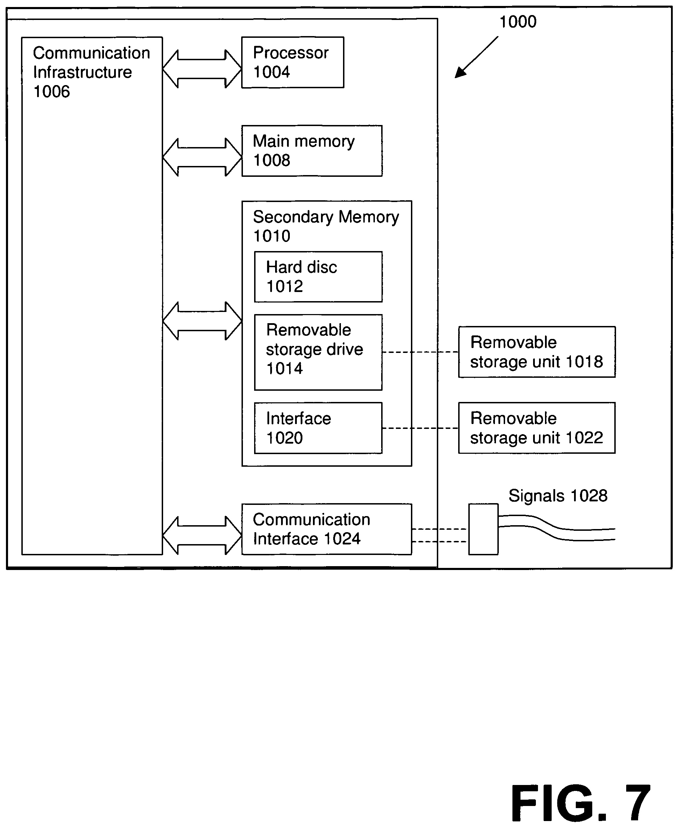

Figure 7 is a block diagram showing the main components of a computer suitable for use in the system of Figure 1 in implementing the above.

### Detailed Description of Embodiments of the Invention

### First embodiment

### System Architecture

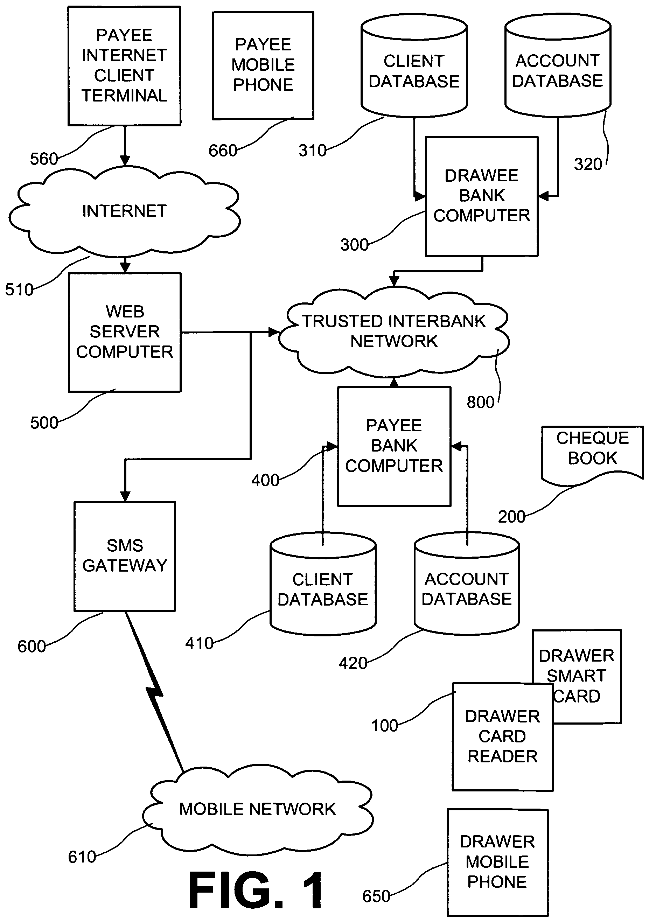

Figure 1 shows the overall system of a preferred embodiment. A user has a personal card reader 100 and a cheque book 200 comprising a plurality of sequentially numbered cheques 201, ....,.

A first bank (which in this embodiment is the issuing or drawee bank) has a computer system 300 comprising a customer database 310 holding records comprising, for each user, the user's name and address; the or each account number and name he holds; the sort code of his branch; and information identifying a personal chip card held by him. It also holds an account database 320 detailing, for each account, the current balance; the cheque numbers issued to the user; and other credit and historical data.

A second bank (which in this embodiment is the payee bank) likewise has a computer system 400 comprising similar customer and account databases 410, 420 respectively.

A web server computer 500 provides a person-to-person or peer-to-peer (usually abbreviated as P2P) payment system similar to the American Express digital payment and commerce platform called Serve™ or that offered by Visa, or those offered by numerous other payment processing companies including the PopMoney™ system from CashEdge Inc. and the QuickPay™ system from JP Morgan Chase, accessible via the Internet 510 from a payee internet client terminal device such as a computer, smartphone or tablet 550. Another example is the system described by the present applicant in PCT application PCT/GB2011/052367 filed on 30 November 2011, agent's reference J53954WO/JC.

An SMS gateway 600 is arranged to receive messages from computers with a designation of a destination mobile telephone and send each as an SMS message to the designated mobile telephone via a mobile telephone network 610 (which may be comprised of a number of separately owned networks via which a message may be passed). The message-enabled telephone (e.g. mobile telephone) of the payer is designated 650 and that of the payee 660 hereafter.

The web server computer 500 is connected to the SMS gateway 600 and to the first bank computer system 300 and the second bank computer system 400, and those bank computer systems are interconnected to each other, by secure electronic communications channels making up a Trusted Interbank Communications Network 800 currently used for clearing and other electronic payment systems and well known in the art.

The hardware of the card reader 100 in a preferred embodiment is that of a standard online banking authentication device. Examples are the PINSentry™ device supplied by Barclays Bank, the present applicant, or the Card-Reader device supplied by Natwest Bank. Some aspects of the former are described in the applicant's earlier PCT publication WO 2007/096590. Such a device complies with the Chip Authentication Programme (CAP) described in "Optimised to Fail: Card Readers for Online Banking", Saar Drimer, Steven J. Murdoch, and Ross Anderson, Financial Cryptography and Data Security '09, Barbados, February 2009. Springer LNCS (online at http://www.cl.cam.ac.uk/∼sjm217/papers/fc09optimised.pdf), itself based on the public EMV (Europay, MasterCard, Visa) chip-and-PIN payment standard (for which see http://www.emvco.com/).

### Card Reader system 100

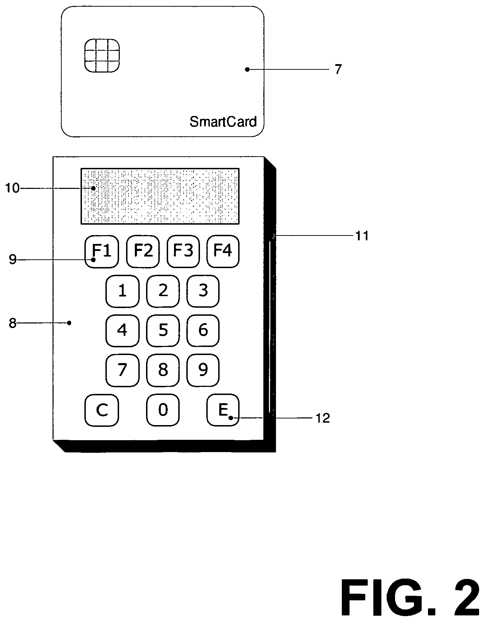

Figure 2 shows the details of the card reader system 100. It consists of a smart card 1 and a card reader 2. The latter comprises a numeric keypad 8, identify respond and sign keys 9a, 9b, 9c, an enter key 12 for confirming entries, a display 10 for displaying messages and echoing key presses, and a smart card reader slot 11. Any smart card 1 conforming to the relevant standards (such as ISO-7816 or EMV) can be inserted into the smartcard reader slot 11 by the user. The smart card 1 includes contacts 7 for electrical connection to corresponding contacts within the slot 11, although a contactless connection may be used instead. It carries a processor and secure storage of data including the user's Personal Identification Number (PIN).

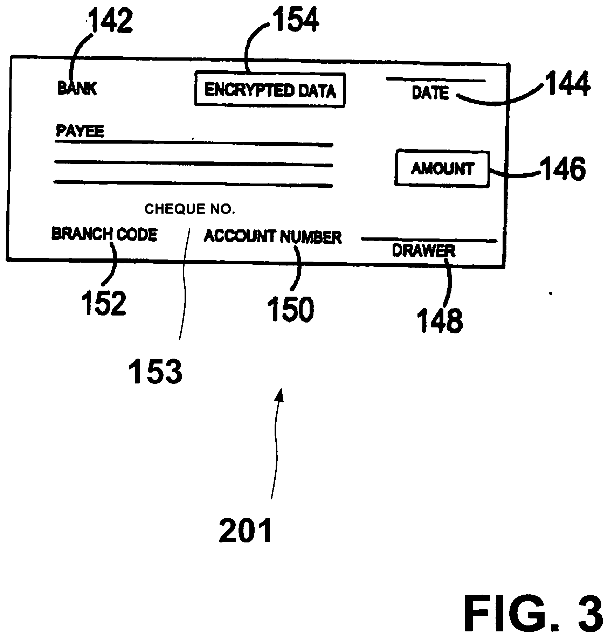

Figure 3 shows schematically a cheque 201 according to the present embodiment. It is a printed paper document carrying pre-printed data relating to the drawer bank 142, the drawer 148, account number 150 and branch code (sort code) number 152. These data are common to all the cheques 201, ..., in the book 200. It also carries a printed unique sequential cheque number 153. These data are also reproduced in machine-readable font at the bottom of the cheque. In the UK cheques conform to "Cheque and Credit Clearing Company "Standard 3", the industry standard detailing layout and font (with which Figure 3 is not intended to accurately comply).

The cheque 201 has spaces for entry by the drawer of the date 144, the amount 146, and the name of the payee 140. Finally, it has space 154 for manual entry by the drawer of a code described in further detail below. In a preferred embodiment no printed space for this is provided and it is instead simply written on the rear of the cheque.

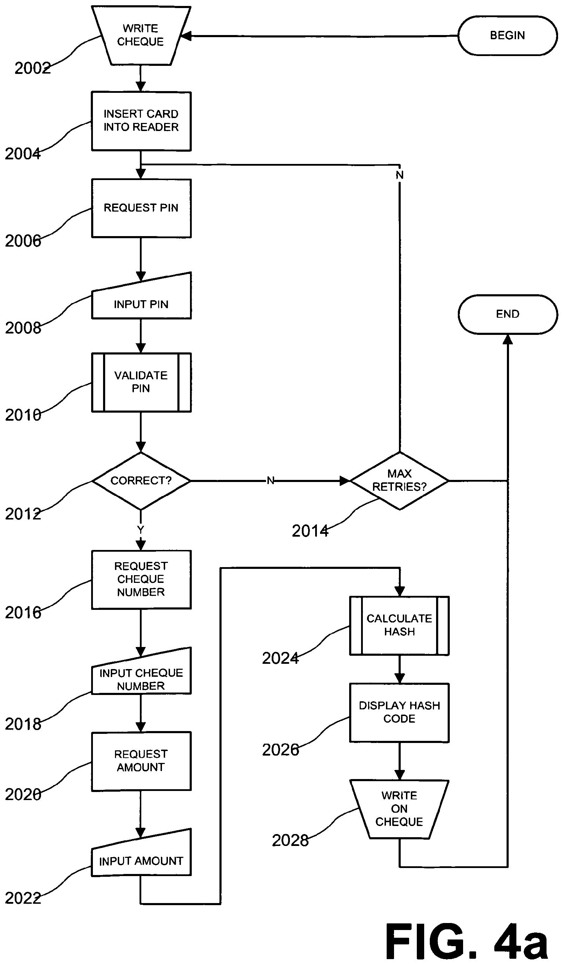

The process performed by the card reader system 100 will now be described with reference to Figure 4a. In step 2002, the user writes a cheque 201 to the payee. In step 2004, the user inserts his chip card 1 into the reader 2 and the reader and card exchange data in conventional fashion. In step 2006, the reader displays a challenge: "Enter PIN". In step 2008, the user presses the "Sign" key and enters his PIN. In step 2010, the smart card compares the PIN to that it has stored. If they do not match (step 2012), until the maximum number of incorrect entries is attempted (step 2014), the user is requested to re-enter the PIN. When a match is found (step 2012), the user is authenticated as the correct user of the card. These steps 2004-2014 are performed exactly as in known online banking cards according to the CPA protocol.

The smart card then executes a cheque security application. In step 2016, the smart card causes the card reader to display a prompt to "Enter Reference Number". The user enters the cheque number in response. In step 2018, the smart card causes the card reader to display a prompt to "Enter Amount". Again, the user does so. The smart card then calculates (step 2024) from these two numbers (which collectively are the basis of the "challenge") a "response" which is a hash or digital signature function of the challenge, using a stored encryption key. The response may for example be 8 digits long as in online banking systems. It is a one-way function of the challenge; that is, the challenge cannot be inferred from the response, even from several samples of the response, unless the key is known. Where convenient, the smart card may use only portions of the cheque number - for example the last few digits.

In step 2026 the smart card causes the card reader to display the response. In step 2028 the user writes down the response in the area 154 of the cheque 201. The process of writing the cheque is then complete. The user sends or hands the cheque to the intended recipient, the paid party, who can of course simply pay it in manually over the counter of his bank, for conventional cheque processing and payment, as is well known at present. However, the invention provides that it can also be used for online electronic payment as described hereafter.

### Payment Server 500 and Drawee Bank Computer System 300

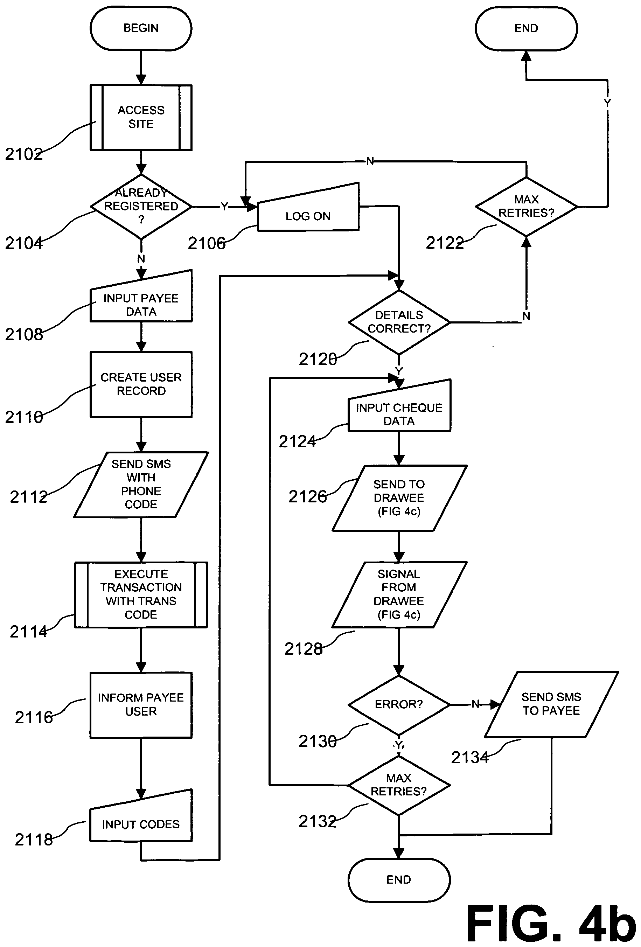

Referring now to Fig 4b, the steps undertaken by the paid party according to this embodiment will now be described. In step 2102, using an internet client terminal 560 (such as a computer, smartphone or tablet) connected to the Internet 510, the bearer of the cheque (usually the payee but, in some countries, the assignee of the payee) accesses a website hosted by the P2P payment web server computer 500, which is preferably owned and operated by the drawee bank (or, in principle, could be operated by a trusted third party such as an interbank clearing organisation in which the drawee bank participates). The user may already be registered (step 2104) in which case they simply log on in step 2106 with a mobile phone verification code and account verification code (described below).

If not registered, then in step 2108, the server computer 500 transmits a page inviting the payee to enter their name and mobile phone number, and the account number and sort code of the payee account and, as security information, their address, date of birth and nationality and the user does so.

In step 2110, the server computer 500 creates an account record for the payee user storing the input information. In step 2112, the server computer 500 sends a message via the SMS centre 600 and mobile network(s) 610 to the mobile phone 660 identified by the payee user, containing a (pseudorandomly generated) mobile phone verification code. In step 2114, the server computer 500 creates an online payment transaction crediting the identified account with 1 penny (or equivalent minimum value transaction in other currencies) and quoting a (pseudorandomly generated) account verification code. These codes are stored with the account record.

In step 2116, the server computer 500 sends the payee client terminal 560 a web page informing the user of these transactions and inviting the payee to input the mobile phone verification code and the account verification code.

The payee then checks his mobile phone 660 for the text message, goes online to his bank account and checks the transaction for the transaction code, enters both into the browser on the client terminal 560 and uploads them to the server computer 500 in step 2118.

The server computer 500 checks the codes against those stored in the account record (step 2120). If they do not match and the maximum number of retries (e.g. 3) is exceeded (step 2122), the server computer 500 ends the session, otherwise the server computer 500 returns to step 2106.

When they do match, the server computer 500 prompts the payee to enter the following data from the cheque 201:
- Cheque number
- Account number of drawer
- Account name
- Sort code
- Date
- Amount
- Encrypted hash data

The payee does so (step 2124) and in step 2126, the web server 500 transmits these, and the payee account details, to the drawee bank system 300.

In step 3102, the bank system 300 checks the drawer record, locates the encryption key associated with the user (in some embodiments, the same key may be used for all users) and calculates the encrypted data using the input payment amount and cheque number. If they do not match the uploaded hash data from the cheque (step 3104) then the bank computer system 300 sets a transaction error condition (step 3106) and signals it back (step 3108) to the server computer 500 (step 2128).

The latter tests whether the maximum number of retries (e.g. 3) has been exceeded (step 2132) and if not, returns to step 2124 to allow the payee to re-input the cheque data, which may have been mis-keyed. Otherwise, the payment process ends (as either the payee is attempting fraud or the drawer has written down the wrong encrypted data on the cheque).

If the hash matches in step 3104, then the bank computer system 300 accesses the account database 320; checks, firstly, whether the cheque number has already been used, and secondly, the drawer's account balance. If the cheque number is that of a cheque which has already been presented in a previous transaction (step 3110), or the requested payment would exceed the balance (taking into account any recorded credit facility) (step 3112), the bank computer system 300 sets a transaction problemcondition (step 3114), signals it back (step 3108) to the server computer 500 (step 2128), and takes no further action.

The server computer 500 then sends an SMS message (step 2134) to the mobile phone 660 of the payee (via the SMS centre 600 and mobile network 610) and, if the server session is still live, displays a corresponding message on the user's browser on the terminal 560. If the transaction error condition was signalled in step 3108, the message indicates that the payee should consult the payer to rectify a payment problem.

If the cheque number is unused and the payment would not exceed the account balance (steps 3110 and 3112), the server computer creates an electronic payment transaction debiting the drawer's account in favour of the payee's bank account (step 3116) which is passed to the payee bank computer system 400 via conventional computerized clearing systems. It then signals a "good transaction" message back (step 3108) to the server computer 500 (step 2128).

If the drawer has a mobile phone 650 listed in the customer database 310, the drawee bank computer system 300 sends it a message (via the SMS centre 600 and mobile network 610) indicating that the cheque has been honoured, or not handled, in step 3118.

The server computer 500 then sends an SMS message to the mobile phone 660 of the payee (via the SMS centre 600 and mobile network 610) and, if the server session is still live, displays a corresponding message on the user's browser on the terminal 560. It signals the debit to the server computer 500, which (step 2134) sends an SMS message to the mobile phone 660 of the payee (via the SMS centre 600 and mobile network 610) and, if the server session is still live, displays a corresponding message on the user's browser on the terminal 560.

At this point, the transaction is complete. Unlike the case where a cheque is cashed over the counter, it remains in the possession of the bearer, but there is no risk that it can be used again as the transaction is recorded at the drawer bank- to show the cheque as stopped. Although the conventional paper-based cheque processing system remains, it has not been used but an electronic transaction has been used instead.

### First example

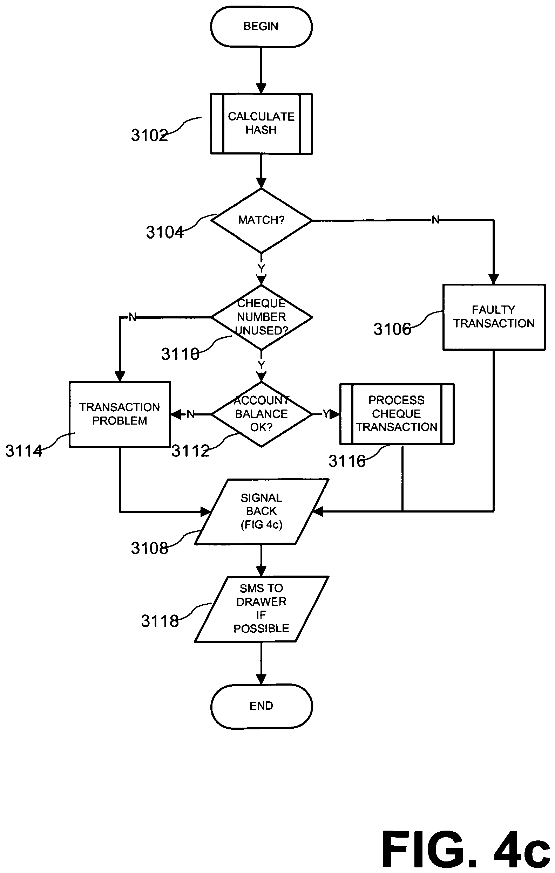

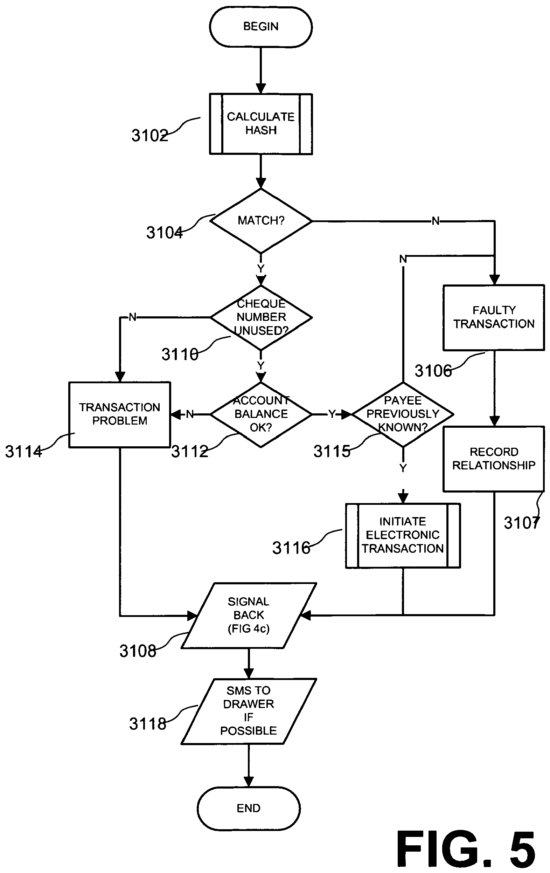

The first example functions in the same manner as the claimed invention, except that the processing described in relation to Figure 4c is replaced by that described in Figure 5 (in which like-numbered steps are the same as in Figure 4c and will not be further described). It will be seen that in the claimed invention, the bearer of the cheque can pay the cheque into his account. In some cases, however, it is preferred that the cheque should only be payable to the payee on its face.

Accordingly, in this example, after step 3112 the computer system 300 reviews (step 3115) the records of prior transactions held in the account database 320 for any transactions between the drawer's account (or accounts if the drawer is identified in the customer database 310 as having several) and the payee account details. If they do not match (i.e. if there are no recorded previous cheque, standing order, direct debit or other transactions between the paid and paying parties), then the transaction is not proceeded with, and the server computer 500 signals to the payee's phone 660 via the SMS centre 600 and mobile network 610 to present the cheque over the counter in the conventional fashion. On the other hand, where previous transactions are found, payment is initiated in step 3116 as in the previous embodiment. Preferably, the account database 320 is updated (step 3107) so that next time the payee requests payment from the same person, that relationship will be recognised and the payment will be validated and made to the payee.

Thus, regular payees such as utility companies or family members, who are presumed to be legitimate payees rather than persons who have stolen the cheque, can use the example to electronically submit cheques but new payees must submit their first cheque payment for manual scrutiny by the drawee bank via the usual clearing processes.

### Second example

This example describes an additional functionality which is preferably provided together with that of the claimed invention and the first example, rather than being used independently thereof, although independent use is also technically possible.

According to this example, the drawer does not use the card reader 100 and does not write the hashed data 154 on the cheque, but simply writes it in the normal way and supplies it to the sender. Thus, in a transaction according to this example, the process of Fig 4a is not performed. Referring to Figure 4b, in this example, steps 2102 to 2124 are performed as described above except that the user does not enter the hashed data 154 from the cheque but merely the six items of cleartext cheque data listed above.

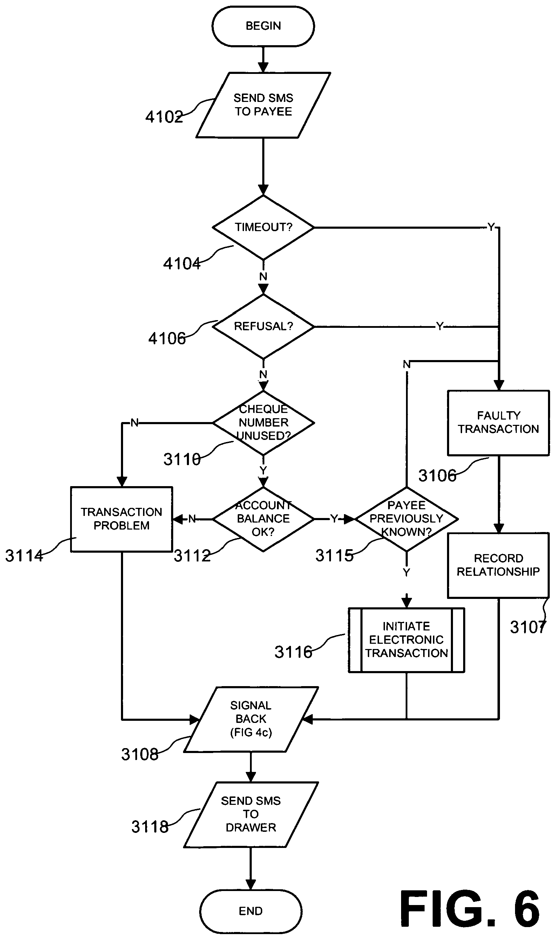

Thus, the bank computer 300, on receipt of the message in Figure 6, cannot perform steps 3102-3104 of Figures 4c and 5. Instead, if the drawer has a mobile phone 650 listed in the customer database 310, the drawee bank computer system 300 sends it a message (via the SMS centre 600 and mobile network 610) containing the six items of information and asking for a reply message indicating whether the transaction is genuine (step 4102).

If no reply message arrives from the drawer telephone 650 within a predetermined timeout threshold (for example, 48 hours) the bank computer 300 signals back a faulty transaction to the server computer 500 (which then resumes the process of Figure 4b). Likewise if (step 4104) the reply does not indicate that the transaction is acceptable. The payee is then at liberty to present the cheque at a bank for conventional manual clearing.

If a reply SMS signal from the drawer telephone 650 within the timeout period indicates that the cheque transaction is acceptable, then the drawee bank computer 300 performs steps 3108-3118 to initiate an electronic payment transaction and stop the cheque as described above, and the server computer performs the corresponding steps of Figure 4b.

It will be recognised that the communications with the payer mobile phone 540 in this embodiment could be driven by the server computer 500 rather than the drawee bank computer 300.

### Computer Systems

The computer systems and SMS gateway described herein may be implemented by computer systems such as computer system 1000 as shown in Figure 5. Embodiments of the present invention may be implemented as programmable code for execution by such computer systems 1000. After reading this description, it will become apparent to a person skilled in the art how to implement the invention using other computer systems and/or computer architectures.

Computer system 1000 includes one or more processors, such as processor 1004. Processor 1004 may be any type of processor, including but not limited to a special purpose or a general-purpose digital signal processor. Processor 1004 is connected to a communication infrastructure 1006 (for example, a bus or network). Various software implementations are described in terms of this exemplary computer system. After reading this description, it will become apparent to a person skilled in the art how to implement the invention using other computer systems and/or computer architectures.

Computer system 1000 also includes a main memory 1008, preferably random access memory (RAM), and may also include a secondary memory 610. Secondary memory 1010 may include, for example, a hard disk drive 1012 and/or a removable storage drive 1014, representing a floppy disk drive, a magnetic tape drive, an optical disk drive, etc. Removable storage drive 1014 reads from and/or writes to a removable storage unit 1018 in a well-known manner. Removable storage unit 1018 represents a floppy disk, magnetic tape, optical disk, etc., which is read by and written to by removable storage drive 1014. As will be appreciated, removable storage unit 618 includes a computer usable storage medium having stored therein computer software and/or data.

In alternative implementations, secondary memory 1010 may include other similar means for allowing computer programs or other instructions to be loaded into computer system 1000. Such means may include, for example, a removable storage unit 1022 and an interface 1020. Examples of such means may include a program cartridge and cartridge interface (such as that previously found in video game devices), a removable memory chip (such as an EPROM, or PROM, or flash memory) and associated socket, and other removable storage units 1022 and interfaces 1020 which allow software and data to be transferred from removable storage unit 1022 to computer system 1000. Alternatively, the program may be executed and/or the data accessed from the removable storage unit 1022, using the processor 1004 of the computer system 1000.

Computer system 1000 may also include a communication interface 1024. Communication interface 1024 allows software and data to be transferred between computer system 1000 and external devices. Examples of communication interface 1024 may include a modem, a network interface (such as an Ethernet card), a communication port, a Personal Computer Memory Card International Association (PCMCIA) slot and card, etc. Software and data transferred via communication interface 1024 are in the form of signals 1028, which may be electronic, electromagnetic, optical, or other signals capable of being received by communication interface 1024. These signals 1028 are provided to communication interface 1024 via a communication path 1026. Communication path 1026 carries signals 1028 and may be implemented using wire or cable, fibre optics, a phone line, a wireless link, a cellular phone link, a radio frequency link, or any other suitable communication channel. For instance, communication path 1026 may be implemented using a combination of channels.

The terms "computer program medium" and "computer usable medium" are used generally to refer to media such as removable storage drive 1014, a hard disk installed in hard disk drive 1012, and signals 1028. These computer program products are means for providing software to computer system 1000. However, these terms may also include signals (such as electrical, optical or electromagnetic signals) that embody the computer program disclosed herein.

Computer programs (also called computer control logic) are stored in main memory 1008 and/or secondary memory 1010. Computer programs may also be received via communication interface 1024. Such computer programs, when executed, enable computer system 1000 to implement embodiments of the present invention as discussed herein. Accordingly, such computer programs represent controllers of computer system 1000. Where the example is implemented using software, the software may be stored in a computer program product and loaded into computer system 1000 using removable storage drive 1014, hard disk drive 1012, or communication interface 1024, to provide some examples.

## Claims

1. A computerized payment system for initiating electronic payments based on paper cheques, comprising:
a paying party terminal including a card reader for receiving a smart card, a keyboard for entry of a PIN code and a processor on the smart card arranged to compare the entered PIN code with data stored on the smart card, wherein the paying party terminal is arranged to authenticate the paying party by comparing the entered PIN code with data stored on the smart card, if the paying party is authenticated as the correct user request the paying party to input cleartext data from a cheque issued by a first bank, at which the paying party has an account, and generate therefrom encoded data using a key which is displayed and written by the paying party on the cheque which is sent or handed to a paid party and
a computer associated with said first bank, arranged to:
accept, from the paid party, data defining a second bank and an account thereat associated with the paid party;
accept, from said paid party, by entering the cleartext data from the cheque and said encoded data, and to validate the cleartext data from the cheque using the encoded data and the key; and
arrange a transfer from said first bank to said second bank of the amount specified on said cheque.

2. A system according to claim 1 in which the cleartext cheque data to be input includes the payment amount.

3. A system according to claim 1 in which the cleartext cheque data to be input includes the cheque number.

4. A system according to claim 1 in which the computer is provided with a web server interface to allow the paid party to communicate electronically therewith.

5. A system according to claim 1 in which the computer is arranged to communicate with a mobile phone of at least one of the parties.

6. A system according to claim 1 further comprising an account database relating to the paying party account at the first bank, and a computer arranged to determine therefrom whether there have been previous transactions between the paying and paid parties and, if not, to cease to initiate the transaction.

7. A paying party terminal adapted for use in the system of any preceding claim.

8. A computer associated with said first bank adapted for use in the system of any of claims 1 to 6.

9. A computer-implemented method of initiating electronic payments based on paper cheques by:
the payer using a device including a display and a card reader for receiving a smart card, a keyboard for entry of a PIN code and a processor on the smart card for comparing the entered PIN code with data stored on the smart card, to authenticate the payer by comparing the entered PIN code with data stored on the smart card if the paying party is authenticated as the correct user; the payer using the device to generate encoded data from cleartext data on the cheque issued by a first bank, at which the paying party has an account; the device displaying the encoded data on the display the payer writing the displayed encoded data on the cheque and handing or sending the cheque to the payee; the payee entering and uploading his bank account details, the cheque cleartext data and the encoded data to a computer system associated with the payer's bank;
the computer system checking the uploaded cleartext cheque data using the encoded data and, if valid causing the first bank to initiate an electronic transfer of funds to the payee's bank account.

10. A storage medium comprising machine readable instructions stored thereon for causing a computer system to become configured as one of the system of any one of claims 1 to 6, the terminal of claim 7 or the computer of claim 8.

11. A storage medium comprising machine readable instructions stored thereon for causing a computer system to perform a method in accordance with claim 9.

## Patentansprüche

1. Computerbasiertes Zahlungssystem zum Initiieren elektronischer Zahlungen auf der Basis von Papierschecks, umfassend:
ein Zahlungsgeber-Endgerät, beinhaltend ein Kartenlesegerät zum Aufnehmen einer Chipkarte, eine Tastatur zur Eingabe eines PIN-Codes und einen Prozessor auf der Chipkarte, eingerichtet, um den eingegebenen PIN-Code mit auf der Chipkarte gespeicherten Daten zu vergleichen, wobei das Zahlungsgeber-Endgerät für Folgendes eingerichtet ist: Authentifizieren des Zahlungsgebers durch das Vergleichen des eingegebenen PIN-Codes mit auf der Chipkarte gespeicherten Daten, falls der Zahlungsgeber als der korrekte Anwender authentifiziert wird, Auffordern des Zahlungsgebers, Klartextdaten von einem Scheck, ausgestellt von einer ersten Bank, bei der der Zahlungsgeber ein Konto hat, einzutragen, und Erzeugen codierter Daten daraus unter Verwendung eines Schlüssels, der auf dem Scheck, welcher einem Zahlungsnehmer geschickt oder ausgegeben wird, angezeigt ist und von dem Zahlungsgeber darauf geschrieben ist, und
einen mit der ersten Bank assoziierten Computer, der für Folgendes eingerichtet ist:
Akzeptieren, von dem Zahlungsnehmer, von Daten, die eine zweite Bank und ein Konto dort, welches mit dem Zahlungsnehmer assoziiert ist, definieren;
Akzeptieren, von dem Zahlungsnehmer mittels Eingabe, der Klartextdaten von dem Scheck und der codierten Daten und Validieren der Klartextdaten von dem Scheck unter Verwendung der codierten Daten und des Schlüssels; und
Arrangieren einer Überweisung des auf dem Scheck spezifizierten Betrags von der ersten Bank zu der zweiten Bank.

2. System nach Anspruch 1, wobei die einzutragenden Klartextscheckdaten den Zahlungsbetrag beinhalten.

3. System nach Anspruch 1, wobei die einzutragenden Klartextscheckdaten die Schecknummer beinhalten.

4. System nach Anspruch 1, wobei der Computer mit einer Webserverschnittstelle versehen ist, um dem Zahlungsnehmer zu ermöglichen, elektronisch damit zu kommunizieren.

5. System nach Anspruch 1, wobei der Computer eingerichtet ist, um mit einem Mobiltelefon von mindestens einem der Beteiligten zu kommunizieren.

6. System nach Anspruch 1, ferner umfassend eine Kontodatenbank, die mit dem Zahlungsgeber-Konto bei der ersten Bank in Verbindung steht, und einen Computer, der eingerichtet ist, um daraus zu bestimmen, ob zwischen dem Zahlungsgeber und dem Zahlungsnehmer bereits Transaktionen stattgefunden haben, und falls nicht, die Initiierung der Transaktion zu beenden.

7. Zahlungsgeber-Endgerät, das zur Verwendung in dem System nach einem der vorangehenden Ansprüche angepasst ist.

8. Computer, assoziiert mit der ersten Bank, der zur Verwendung in dem System nach einem der Ansprüche 1 bis 6 angepasst ist.

9. Computerimplementiertes Verfahren zum Initiieren elektronischer Zahlungen auf der Basis von Papierschecks durch Folgendes:
Verwenden, durch den Zahlenden, einer Vorrichtung, beinhaltend eine Anzeige und ein Kartenlesegerät zum Aufnehmen einer Chipkarte, eine Tastatur zum Eingeben eines PIN-Codes und einen Prozessor auf der Chipkarte zum Vergleichen des eingegebenen PIN-Codes mit auf der Chipkarte gespeicherten Daten, um den Zahlenden durch das Vergleichen des eingegebenen PIN-Codes mit auf der Chipkarte gespeicherten Daten zu authentifizieren, falls der Zahlungsgeber als der korrekte Anwender authentifiziert wird; Verwenden, durch den Zahlenden, der Vorrichtung zum Erzeugen codierter Daten aus Klartextdaten auf dem Scheck, ausgestellt von einer ersten Bank, bei der der Zahlungsgeber ein Konto hat;
Anzeigen, durch die Vorrichtung, der codierten Daten auf der Anzeige, Schreiben, durch den Zahlenden, der angezeigten codierten Daten auf den Scheck und Ausgeben oder Schicken des Schecks an den Zahlungsempfänger;
Eingeben und Hochladen, durch den Zahlungsempfänger, seiner Bankkontoangaben, der Scheckklartextdaten und der codierten Daten auf ein mit der Bank des Zahlenden assoziiertes Computersystem;
Überprüfen, durch das Computersystem, der hochgeladenen Klartextscheckdaten unter Verwendung der codierten Daten und, falls gültig,
Bewirken, dass die erste Bank eine elektronische Geldüberweisung auf das Bankkonto des Zahlungsempfängers initiiert.

10. Speichermedium, das maschinenlesbare Anweisungen umfasst, die darauf gespeichert sind, um zu bewirken, dass ein Computersystem als eines von dem System nach einem der Ansprüche 1 bis 6, dem Endgerät nach Anspruch 7 oder dem Computer nach Anspruch 8 konfiguriert wird.

11. Speichermedium, das maschinenlesbare Anweisungen umfasst, die darauf gespeichert sind, um zu bewirken, dass ein Computersystem ein Verfahren nach Anspruch 9 ausführt.

## Revendications

1. Un système de paiement informatisé destiné à l'émission de paiements électroniques basés sur des chèques papier, comprenant :
un terminal de partie payante comprenant un lecteur de carte destiné à la réception d'une carte à puce, un clavier destiné à l'entrée d'un code PIN et un processeur sur la carte à puce agencé de façon à comparer le code PIN entré à des données conservées en mémoire sur la carte à puce, où le terminal de partie payante est agencé de façon à authentifier la partie payante par la comparaison du code PIN entré à des données conservées en mémoire sur la carte à puce, si la partie payante est authentifiée être l'utilisateur correct, de façon à demander à la partie payante d'entrer des données en clair provenant d'un chèque émis par une première banque auprès de laquelle la partie payante possède un compte, et de façon à générer à partir de celles-ci des données codées au moyen d'une clé qui est affichée et écrite par la partie payante sur le chèque qui est envoyé ou remis à une partie bénéficiaire, et
un ordinateur associé à ladite première banque, agencé de façon à :
accepter, à partir de la partie bénéficiaire, des données définissant une deuxième banque et un compte auprès de celle-ci associé à la partie bénéficiaire,
accepter, à partir de ladite partie bénéficiaire, par l'entrée des données en clair provenant du chèque et desdites données codées, et valider les données en clair provenant du chèque au moyen des données codées et de la clé, et
mettre en oeuvre un transfert de ladite première banque vers ladite deuxième banque du montant spécifié sur ledit chèque.

2. Un système selon la Revendication 1 dans lequel les données de chèque en clair à entrer comprennent le montant du paiement.

3. Un système selon la Revendication 1 dans lequel les données de chèque en clair à entrer comprennent le numéro de chèque.

4. Un système selon la Revendication 1 dans lequel l'ordinateur est muni d'une interface de serveur web destinée à permettre à la partie bénéficiaire de communiquer électroniquement avec celui-ci.

5. Un système selon la Revendication 1 dans lequel l'ordinateur est agencé de façon à communiquer avec un téléphone mobile d'au moins une des parties.

6. Un système selon la Revendication 1 comprenant en outre une base de données de comptes relative au compte de la partie payante auprès de la première banque et un ordinateur agencé de façon à déterminer à partir de celle-ci s'il y a eu des transactions antérieures entre les parties payante et bénéficiaire et, si non, de façon à suspendre l'émission de la transaction.

7. Un terminal de partie payante adapté à une utilisation dans le système selon l'une quelconque des Revendications précédentes.

8. Un ordinateur associé à ladite première banque adapté à une utilisation dans le système selon l'une quelconque des Revendications 1 à 6.

9. Un procédé mis en oeuvre par ordinateur d'émission de paiements électroniques basés sur des chèques papier par :
l'utilisation par le payeur d'un dispositif comprenant un dispositif d'affichage et un lecteur de carte destiné à la réception d'une carte à puce, un clavier destiné à l'entrée d'un code PIN et un processeur sur la carte à puce destiné à la comparaison du code PIN entré à des données conservées en mémoire sur la carte à puce, de façon à authentifier le payeur par la comparaison du code PIN entré à des données conservées en mémoire sur la carte à puce si la partie payante est authentifiée être l'utilisateur correct,
l'utilisation par le payeur du dispositif de façon à générer des données codées à partir des données en clair sur le chèque émis par une première banque auprès de laquelle la partie payante possède un compte,
l'affichage par le dispositif des données codées sur le dispositif d'affichage,
l'écriture par le payeur des données codées affichées sur le chèque et la remise ou l'envoi du chèque au bénéficiaire, l'entrée et le téléchargement par le bénéficiaire des renseignements relatifs à son compte en banque, des données en clair de chèque et des données codées vers un système informatique associé à la banque du payeur,
la vérification par le système informatique des données de chèque en clair téléchargées au moyen des données codées et, si elles sont valides, l'opération consistant à amener la première banque à émettre un transfert de fonds électronique vers le compte en banque du bénéficiaire.

10. Un support à mémoire contenant des instructions lisibles par ordinateur conservées en mémoire sur celui-ci destinées à amener un système informatique à devenir configuré sous la forme d'un dispositif parmi le système selon l'une quelconque des Revendications 1 à 6, le terminal selon la Revendication 7 ou l'ordinateur selon la Revendication 8.

11. Un support à mémoire contenant des instructions lisibles par ordinateur conservées en mémoire sur celui-ci destinées à amener un système informatique à exécuter un procédé selon la Revendication 9.
